(19) Europäisches Patentamt / European Patent Office / Office européen des brevets

(11) **EP 3 594 671 B1**

(12) **EUROPEAN PATENT SPECIFICATION**

(45) Date of publication and mention
of the grant of the patent:
**07.09.2022  Bulletin 2022/36**

(21) Application number: **18182647.0**

(22) Date of filing: **10.07.2018**

(51) International Patent Classification (IPC):
***G01N 27/416*** (2006.01)

(52) Cooperative Patent Classification (CPC):
**G01N 27/4165**

(54) **METHOD FOR MONITORING THE SENSOR FUNCTION OF A POTENTIOMETRIC SENSOR AND CORRESPONDING POTENTIOMETRIC SENSOR ASSEMBLY**

VERFAHREN ZUR ÜBERWACHUNG DER SENSORFUNKTION EINES POTENTIOMETRISCHEN SENSORS UND ENTSPRECHENDE POTENTIOMETRISCHE SENSORANORDNUNG

PROCÉDÉ PERMETTANT DE SURVEILLER LA FONCTION DE DÉTECTION D'UN CAPTEUR POTENTIOMÉTRIQUE ET ENSEMBLE DE CAPTEUR POTENTIOMÉTRIQUE CORRESPONDENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**15.01.2020  Bulletin 2020/03**

(73) Proprietor: **ABB Schweiz AG**
**5400 Baden (CH)**

(72) Inventors:
• **Carr, Benjamin**
  **Stroud, Gloucestershire GL5 1ST (GB)**

• **Albone, Dave**
  **St Neots, Cambridgeshire PE19 1TS (GB)**

(74) Representative: **Maiwald Patent- und Rechtsanwaltsgesellschaft mbH**
**Elisenhof**
**Elisenstraße 3**
**80335 München (DE)**

(56) References cited:
**EP-A1- 0 497 994     EP-A2- 0 419 769**
**DE-A1- 4 212 792     US-A- 4 189 367**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Prior Art

Document US 4,189,367 A relates to a method for testing high impedance, ion selective electrodes while they are being used for measurement.
Document EP 0 419 769 A2 relates to a method for continuously monitoring an electrode system for potentiometric measurements.

Specification

The invention is about a potentiometric sensor assembly, comprising an ion-sensitive electrode including an ion-sensitive glass bulb, further comprising a reference electrode assembly including a reference electrode, further comprising an ion-sensing circuit having a first terminal connected to the ion-sensitive electrode and a second terminal connected to the reference electrode, said circuit being designed to measure the potential difference that develops in the loop between the reference and the ion-sensitive electrode, further comprising a digital storage unit which is designed to save at least a range of values of the electric impedance of the glass bulb characterizing a healthy function of the sensor.
The invention is further about a method for monitoring the sensor function of a potentiometric sensor, the potentiometric sensor comprising an ion-sensitive electrode including an ion-sensitive glass bulb, further comprising a reference electrode assembly including a reference electrode, further comprising an ion-sensing circuit having a first terminal connected to the ion-sensitive electrode and a second terminal connected to the reference electrode, said circuit being designed to measure the potential difference that develops in the loop between the reference and the ion-sensitive electrode.
Such a potentiometric sensor assembly applies an ion-sensitive electrode to measure an ion concentration in a liquid sample. The sensitivity is determined by the ion-sensitive glass-bulb. The electronic equivalent to the ion-selective electrode is a voltage source with a high internal impedance, typically in the range of several hundreds $M\Omega$. So potentiometric measurement of the potential developing at the ion-sensitive electrode requires a high impedance voltage measurement capability.
Healthy function of the sensor can be assumed if the impedance of the glass bulb is in a range of several hundred $M\Omega$, for example in a range between 100 $M\Omega$ and 500 $M\Omega$.
One of the most widely applied, although not a limiting, example for such a potentiometric sensor assembly is a potentiometric pH-sensor assembly. Ion sensitive electrodes that measure pH are well known in the prior art. Conventionally, pH sensors often consist of a measurement or pH electrode and reference electrode, each having a silver wire (Ag) with a silver chloride (AgCl) coating at its end. The pH electrode typically has an internal filled chloride buffer in aqueous solution having a selected pH (chloride buffer) that is often a pH of about 7 and a pH sensitive glass surrounding the internal silver wire and chloride buffer. The reference electrode typically has a container with an internal-filled reference solution of potassium chloride in aqueous solution (reference solution). The ion-sensitive glass typically has two hydrated gel layers, one layer on the inside surface and another on the outside surface. PH sensing is accomplished when a potential difference develops between the two hydrated gel layers. A hydrogen ion does not exist by itself in aqueous solution. It is associated with a water molecule to form a hydronium ion ($H_3O^+$). The glass enclosed pH electrode develops a potential when hydronium ions get close enough to the glass bulb surface for hydrogen ions to jump and become associated with hydronium ions in an outer hydrated gel layer disposed on the glass bulb surface. This thin gel layer is essential for electrode response. The input to the pH measurement circuit in a pH sensor is the potential difference that develops between the external glass surface having potential Eg that is exposed to the sample liquid and the internal glass surface having potential Er that is wetted by the chloride buffer having the selected pH. The potential difference that develops follows the Nernst equation. Assuming the chloride buffer has a temperature of 25° C and a pH of 7 then the potential difference (which is conventionally also the input to the ion-sensing, here pH measurement, circuit) is:

$$E_g - E_r \sim 0.1984 \, (T + 273.16) \, (7 - pH).$$

The potential difference that develops is proportional to the deviation of the process pH from 7 pH at 25° C. If the pH of the process stream equals 7 then the potential difference measured will be zero.
Measurement of the impedance of the ion-sensitive glass bulb is an appropriate means to provide glass bulb diagnostics, such as "broken glass" and "out of solution". It allows a smart ion-sensitive sensor, such as a smart pH sensor, to provide such glass diagnostics. This allows the user to be notified when there are cracks in the ion-sensitive glass, which would make the measurement invalid, or when there is no sample present.
In the prior art such glass bulb diagnostics requires a solution ground rod, either integrated into the sensor, or external to the sensor. A solution ground rod usually comprises a metallic pin or rod in direct contact with the sample to be measured. The metallic pin or rod is usually stainless steel or titanium giving good chemical resistance. This gives the electronics direct electrical contact to the solution. The electronics can then measure the impedance between the glass electrode and the solution earth. US 6,894,502 B2 shows this exemplarily.
However, the addition of a solution earth electrode adds complexity to the electrode assembly.
It is therefore the objective of the present invention to provide a potentiometric sensor assembly which allows glass-bulb diagnostics to be performed without the need for a solution ground rod. It is a further objective of the present invention to provide a method for monitoring the sensor function of a potentiometric sensor, particularly glass-bulb diagnostics, without the need for a solution ground rod.

The objective is achieved according to the invention by a method with the steps as disclosed in claim 1 or 2.

The objective is further achieved by a potentiometric sensor assembly with the features according to claim 3 or 4.

In an advantageous embodiment, the ion-selective electrode further comprises a second container containing an ion-buffer, wherein at least a part of the second container is composed of the ion-sensitive glass bulb.

In an advantageous embodiment, the ion-sensitive electrode is a pH-sensitive electrode, the ion-buffer is a pH-buffer and the ion-sensitive glass bulb is made of pH-sensitive glass, the pH-sensitive electrode comprising a silver wire coated at least partly with silver chloride in contact with the pH-buffer.

In an advantageous embodiment, the ion-sensing circuit is further designed to preform one or more out of amplification, filtering, analog to digital conversion, signal transmission with respect to the potential difference that develops in the loop between the reference and the ion-sensitive electrode.

In an advantageous embodiment, the ion-sensing circuit is designed as a distributed electronic circuit, wherein at least a part of the functions of amplification, filtering, analog to digital conversion, signal transmission with respect to the potential difference that develops in the loop between the reference and the ion-sensitive electrode is executed in such a part of the ion-sensitive circuit that forms a separable or inseparable unit with the ion-sensitive electrode.

In an advantageous embodiment, the ion-sensitive circuit further comprises a micro-processor and data storage means for storing at least an application program for the micro-processor and sensor configuration data and sensor measurement data.

In an advantageous embodiment, the ion-sensing circuit further comprises an interface for outputting a signal to a higher-order unit, particularly a transmitter, and/or for receiving a signal from the higher-order unit.

In an advantageous embodiment, the ion-sensing circuit is further designed to issue a "out of solution" - warning if the calculated impedance of the ion-sensitive glass bulb is higher than the highest value in the pre-defined range of values of the electric impedance of the glass bulb characterizing a healthy function of the sensor, and to issue a "broken glass" warning, if the calculated impedance of the ion-sensitive glass bulb is lower than the lowest value in the pre-defined range of values of the electric impedance of the glass bulb characterizing a healthy function of the sensor.

The invention and further advantages of the invention will now be explained in more detail with reference to the figures attached, wherein

Figure 1     shows a schematic and exemplary potentiometric sensor assembly according to an embodiment of the invention,

Figure 2     shows a schematic electric equivalent circuit of the potentiometric sensor assembly shown in figure 1.

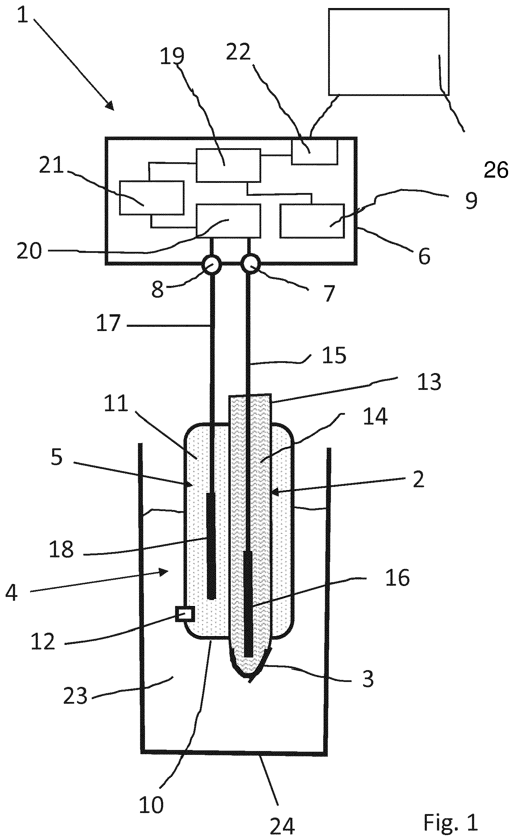

Figure 1 shows a potentiometric sensor assembly 1. It has an ion-sensitive electrode 2, here a pH-electrode 2, which includes an ion-sensitive, here a pH-sensitive, glass bulb 3. It further has a reference electrode assembly 4, including a reference electrode 5. The ion-sensitive electrode 2 and the reference electrode 5 are electrically connected to an ion-sensing circuit 6. The ion-sensing circuit 6 has a first terminal 7 connected to the ion-sensitive electrode 2 and a second terminal 8 connected to the reference electrode 5.

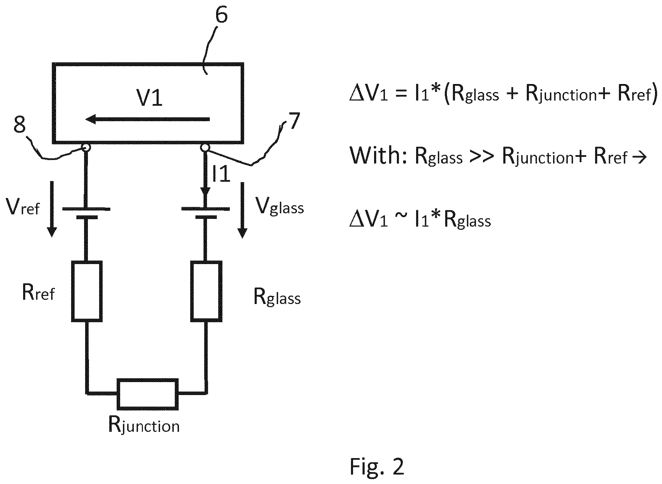

When immersed into an aqueous solution 23 to be analysed, in the exemplary scheme of figure 1 this aqueous solution 22 is contained in a container 24, a potential difference $V1$ will develop between the terminals 7 and 8, as is illustrated in the electrical equivalent circuit shown in figure 2. Vglass is the potential difference that develops across the ion-sensitive glass bulb 3 and which is a measure for the ion concentration in the aqueous solution 23. Vref is the potential that develops at the reference electrode 5 and which is more or less constant.

The ion-sensing circuit 6 is designed to measure the potential difference $V1$ that develops in the loop between the reference and the ion-sensitive electrode 2, 5, see figure 2.

The ion-sensing circuit 6 further has a digital storage unit 9 which is designed to save at least a range of values of the electric impedance of the glass bulb 3 characterizing a healthy function of the sensor 2.

The reference electrode assembly 4 comprises a container 10 containing a reference buffer 11 in contact with a liquid junction 12 extending to an outside surface of the container 10. The liquid junction is basically known to the skilled person, it can be for example a diaphragm. The reference electrode 5 is disposed in the container 10 and in contact with the reference buffer 11. The reference electrode 5 comprises a silver wire 17 coated at least partly with silver chloride 18 in contact with the reference-buffer 11

The ion-selective electrode 2 further comprises a second container 13 containing an ion-buffer 14, wherein the lower part of the second container 13 is composed of the ion-sensitive glass bulb 3.

Particularly, the ion-sensitive electrode 2 is a pH-sensitive electrode, the ion-buffer 14 is a pH-buffer and the ion-sensitive glass bulb 3 is made of pH-sensitive glass, the pH-sensitive electrode comprising a silver wire 15 coated at least partly with silver chloride 16 in contact with the pH-buffer 14.

The ion-sensing circuit 6 is further designed to preform one or more out of amplification, filtering, analog to digital conversion, signal transmission with respect to the potential difference that develops in the loop between the reference electrode 5 and the ion-sensitive electrode 2. In the electrical equivalent circuit shown in figure 2, the potential difference is marked as V1, and it is connected between the first terminal 7 and the second terminal 8 of the ion-sensing circuit 6.

To fulfil its functionality, the ion-sensitive circuit 6 further comprises a micro-processor 19 and data storage means 9 for storing at least an application program for the micro-processor 19 and sensor configuration data and sensor measurement data. The ion-sensitive circuit further has an amplifier 20, which may have integrated filtering functionality, and analog-to-digital converter 21 for digitalization of the measured and amplified resp. filtered measurement values of the potential difference V1. The ion-sensing circuit 6 further comprises an interface 22 for outputting a signal to a higher-order unit 26, particularly a transmitter, and/or for receiving a signal from the higher-order unit 26.

The potentiometric sensor assembly 1 allows for a glass-bulb diagnostics to be performed with the following steps.

A pre-defined electric test current I1 is injected from the first terminal 7 of the ion-sensing circuit 6 into the loop comprising the ion-sensitive electrode 2 and the reference electrode 5. The additional potential difference $\Delta V1$ that develops in the loop between the reference and the ion-sensitive electrode in reaction to the injection of the test current I1 is monitored by the ion-sensing circuit 6. With reference to the electric equivalent circuit shown in figure 2, one can see that, when a current I1 is injected at the first terminal 7, the voltage V1 changes by

$$\Delta V1 = I1*(Rglass+Rref+Rjunction).$$

Rglass is the electric resistance or electric impedance of the ion-sensitive glass bulb 3. Rref is the electric resistance or electric impedance of the reference electrode 5. Rjunction is the electric resistance or electric impedance of the liquid junction 12, for example the diaphragm 12.

Rglass will be many orders of magnitude more than the sum of Rref+Rjunction. A typical value, exemplarily and not limiting, may be 300 M$\Omega$ for Rglass and 50 k$\Omega$ for the sum of Rref+Rjunction. So in a good approximation, one can say that

$$\Delta V1 = I1 * Rglass.$$

One can even calculate the electric impedance Rglass of the ion-sensitive glass bulb 3 from the electric test current I1 and the additional potential difference $\Delta V1$ as follows:

$$Rglass = \Delta V1 / I1$$

This approximation introduces very little error. With typical values of 300M· for Rglass and 50K· for Rreference, the approximation gives an error of 0.016% on the glass resistance Rglass, which is smaller than the measurement circuits intrinsic error within the ion-sensing circuit 6.

This allows the ion-sensing circuit 6 to provide broken glass and out of solution diagnostics, by determining if either the additional potential difference $\Delta V1$ is within an expected range characterizing healthy function of the sensor, or if the calculated impedance Rglass of the ion-sensitive glass bulb 3 is within the pre-defined range of values of the electric impedance of the glass bulb characterizing a healthy function of the sensor.

In case of a broken glass, conducting liquid will be able to flow through cracks and short-circuit the high glass impedance, the calculated glass impedance Rglass will deteriorate, and so will the additional potential difference $\Delta V1$.

On the other hand, in case the ion-sensitive electrode 2 is out of solution, is not immersed in a aqueous solution, the glass impedance Rglass will become very much higher than the several hundred M$\Omega$ it has in normal operation, and the ion-sensing circuit 6 would notify this. In fact, if the ion-sensitive electrode 2 falls out of solution, the electric loop in the equivalent circuit formed by Vglass - Rglass - Rjunction - Rref - Vref gets interrupted. The additional voltage $\Delta V1$ will grow out of range, and so will grow the calculated glass impedance Rglass, until the ion-sensing circuit 6 will notify open terminals 7, 8.

So the ion-sensing circuit is further designed to issue a "out of solution" - warning if the additional potential difference $\Delta V1$ is higher than the highest value in an expected range characterizing healthy function of the sensor, and to issue a "broken glass" warning, if the additional potential difference ($\Delta V1$) is lower than the lowest value in an expected range characterizing healthy function of the sensor.

If the electric impedance of the glass bulb is calculated, the ion-sensing circuit 6 is further designed to issue a "out of solution" - warning if the calculated impedance of the ion-sensitive glass bulb is higher than the highest value in the pre-defined range of values of the electric impedance of the glass bulb characterizing a healthy function of the sensor, and to issue a "broken glass" warning, if the calculated impedance of the ion-sensitive glass bulb is lower than the lowest value in the pre-defined range of values of the electric impedance of the glass bulb characterizing a healthy function of the sensor.

The ion-sensing circuit 6 may further be designed as a distributed electronic circuit, wherein at least a part of the functions of amplification 20, filtering, analog to digital conversion 21, signal transmission 22 with respect to the potential difference that develops in the loop between the reference and the ion-sensitive electrode is executed in such a part of the ion-sensitive circuit that forms a separable or inseparable unit with the ion-sensitive electrode 2.

The electric test current I1 may be a DC or an AC current. AC currents have an advantage in that the risk of building up of additional electrochemical diffusion potentials at the respective electrodes which may become an additional source of error is minimized.

List of reference signs

| 1 | Potentiometric sensor assembly |
|---|---|
| 2 | Ion-sensitive electrode, pH-electrode |
| 3 | Ion-sensitive glass bulb |
| 4 | Reference electrode assembly |
| 5 | Reference electrode |
| 6 | Ion-sensing circuit |
| 7 | First terminal |
| 8 | Second terminal |
| 9 | Digital storage unit |
| 10 | Container |
| 11 | Reference buffer |
| 12 | Liquid junction |
| 13 | Second container |
| 14 | Ion buffer, pH buffer |
| 15 | Silver wire |
| 16 | Silver chloride |
| 17 | Silver wire |
| 18 | Silver chloride |
| 19 | Micro processor |
| 20 | Amplifier |
| 21 | A/D converter |
| 22 | Interface |
| 23 | Aqueous solution |
| 24 | container |
| $\Delta V1$ | additional potential difference |
| I1 | Test current |

**Claims**

1. A method for monitoring the sensor function of a potentiometric sensor, the potentiometric sensor comprising

   - an ion-sensitive electrode (2) including an ion-sensitive glass bulb (3),
   - a reference electrode assembly (4) including a reference electrode (5),
   - an ion-sensing circuit (6) having a first terminal (7) connected to the ion-sensitive electrode (2) and a second terminal (8) connected to the reference electrode (5), said circuit (6) being designed to measure the potential difference (V1) that develops in the loop between the reference and the ion-sensitive electrode (5, 2),

   the method comprising the steps of

   a) injecting a pre-defined electric test current (I1) from the ion-sensing circuit (6) into the loop comprising the reference and the ion-sensitive electrode (5, 2),
   b) monitoring an additional potential difference ($\Delta V1$) that develops in the loop between the reference and the ion-sensitive electrode (5, 2) in reaction to the injection of the test current (I1),
   c) determining if the additional potential difference ($\Delta V1$) is within an expected range characterizing healthy function of the sensor, and
   g) issuing an "out of solution" warning, in case the ion-sensitive electrode (2) is not immersed in a aqueous solution, if the additional potential difference ($\Delta V1$) is larger than an expected range characterizing healthy function of the sensor, and issuing a "broken glass" warning, if the additional potential difference ($\Delta V1$) is lower than an expected range characterizing healthy function of the sensor.

2. A method for monitoring the sensor function of a potentiometric sensor, the potentiometric sensor comprising

   - an ion-sensitive electrode (2) including an ion-sensitive glass bulb (3),
   - a reference electrode assembly (4) including a reference electrode (5),
   - an ion-sensing circuit (6) having a first terminal (7) connected to the ion-sensitive electrode (2) and a second terminal (8) connected to the reference electrode (5),
   said circuit (6) being designed to measure the potential difference (V1) that develops in the loop between the reference and the ion-sensitive electrode (5, 2),
   the method comprising the steps of

a) injecting a pre-defined electric test current (11) from the ion-sensing circuit (6) into the loop comprising the reference and the ion-sensitive electrode (5, 2),

b) monitoring an additional potential difference ($\Delta$V1) that develops in the loop between the reference and the ion-sensitive electrode (5, 2) in reaction to the injection of the test current (11),

d) pre-defining a range of the electric impedance (Rglass) of the glass bulb (3) characterizing a healthy function of the sensor,

e) calculating the electric impedance (Rglass) of the ion-sensitive glass bulb (3) from the electric test current (11) and the additional potential difference ($\Delta$V1),

f) determining if the calculated impedance (Rglass) of the ion-sensitive glass bulb (3) is within the pre-defined range of the electric impedance of the glass bulb (3) characterizing a healthy function of the sensor, and

h) issuing a "out of solution" warning, in case the ion-sensitive electrode (2) is not immersed in a aqueous solution, if the calculated impedance (Rglass) of the ion-sensitive glass bulb (3) is higher than the highest value in the pre-defined range of values of the electric impedance of the glass bulb (3) characterizing a healthy function of the sensor, and issuing a "broken glass" warning, if the calculated impedance (Rglass) of the ion-sensitive glass bulb (3) is lower than the lowest value in the pre-defined range of values of the electric impedance of the glass bulb (3) characterizing a healthy function of the sensor.

3. A potentiometric sensor assembly (1) for executing the method of claim 1, comprising

    - an ion-sensitive electrode (2) including an ion-sensitive glass bulb (3),
    - a reference electrode assembly (4) including a reference electrode (5),
    - an ion-sensing circuit (6) having a first terminal (7) connected to the ion-sensitive electrode (2) and a second terminal (8) connected to the reference electrode (5), said circuit (6) being designed to measure the potential difference ($\Delta$V1) that develops in the loop between the reference and the ion-sensitive electrode (5, 2),
    - a digital storage unit (9) which is designed to save at least an expected range of the additional potential difference ($\Delta$V1) characterizing healthy function of the sensor,

wherein the ion-sensing circuit (6) is further designed to carry out steps a), b), c) and g) of claim 1.

4. A potentiometric sensor assembly (1) for executing the method of claim 2, comprising

    - an ion-sensitive electrode (2) including an ion-sensitive glass bulb (3),
    - a reference electrode assembly (4) including a reference electrode (5),
    - an ion-sensing circuit (6) having a first terminal (7) connected to the ion-sensitive electrode (2) and a second terminal (8) connected to the reference electrode (5), said circuit (6) being designed to measure the potential difference (V1) that develops in the loop between the reference and the ion-sensitive electrode (5, 2),
    - a digital storage unit (9) which is designed to save at least a range of values of the electric impedance (Rglass) of the glass bulb (3) characterizing a healthy function of the sensor,

wherein the ion-sensing circuit (6) is further designed to carry out steps a), b), d), e), f) and h) of claim 2.

5. The potentiometric sensor assembly (1) according to any of claims 3 or 4, **characterized in that**
the reference electrode assembly (4) comprises a container (10) containing a reference buffer (11) in contact with a liquid junction (12) extending to an outside surface of the container (10), and that the reference electrode (5) is disposed in the container (10) and in contact with the reference buffer (11).

6. The potentiometric sensor assembly (1) according to claim 5, **characterized in that**
the ion-selective electrode (2) further comprises a second container (13) containing an ion-buffer (14), wherein at least a part of the second container (13) is composed of the ion-sensitive glass bulb (3).

7. The potentiometric sensor assembly (1) according to claim 6, **characterized in that**
the ion-sensitive electrode (2) is a pH-sensitive electrode, the ion-buffer (14) is a pH-buffer and the ion-sensitive glass bulb (3) is made of pH-sensitive glass, the pH-sensitive electrode (2) comprising a silver wire (15) coated at least partly with silver chloride (16) in contact with the pH-buffer (14).

8. The potentiometric sensor assembly (1) according to claim 3 or 4, **characterized in that**
the ion-sensing circuit (6) is further designed to preform one or more out of amplification, filtering, analog to digital conversion, signal transmission with respect to the potential difference (V1) that develops in the loop between the reference and the ion-sensitive electrode (5, 2).

9. The potentiometric sensor assembly (1) according to claim 8, **characterized in that**

the ion-sensing circuit (6) is designed as a distributed electronic circuit, wherein at least a part of the functions of amplification, filtering, analog to digital conversion, signal transmission with respect to the potential difference that develops in the loop between the reference and the ion-sensitive electrode (5, 2) is executed in such a part of the ion-sensitive circuit that forms a separable or inseparable unit with the ion-sensitive electrode.

10. The potentiometric sensor assembly (1) according to claim 8, **characterized in that**
the ion-sensitive circuit (6) further comprises a microprocessor (19) and data storage means (9) for storing at least an application program for the microprocessor (19) and sensor configuration data and sensor measurement data.

11. The potentiometric sensor assembly according to claim 10, **characterized in that**
the ion-sensing circuit (6) further comprises an interface (22) for outputting a signal to a higher-order unit (26), particularly a transmitter, and/or for receiving a signal from the higher-order unit (26).


**Patentansprüche**

1. Verfahren zum Überwachen der Sensorfunktion eines potentiometrischen Sensors, wobei der potentiometrische Sensor Folgendes umfasst:

    - eine für Ionen empfindliche Elektrode (2), die einen für Ionen empfindlichen Glaskolben (3) aufweist,
    - eine Referenzelektrodenanordnung (4), die eine Referenzelektrode (5) enthält,
    - eine Ionenerfassungsschaltung (6), die einen mit der für Ionen empfindlichen Elektrode (2) verbundenen ersten Anschluss (7) und einen mit der Referenzelektrode (5) verbundenen zweiten Anschluss (8) besitzt, wobei die Schaltung (6) entworfen ist, um die Potenzialdifferenz (V1), die sich in der Schleife zwischen der Referenzelektrode (5) und der für Ionen empfindlichen Elektrode (2) entwickelt, zu messen,

    wobei das Verfahren die folgenden Schritte umfasst:

    a) Einleiten eines im Voraus definierten elektrischen Prüfstroms (I1) von der Ionenerfassungsschaltung (6) in die Schleife, die die Referenzelektrode (5) und die für Ionen empfindliche Elektrode (2) enthält,
    b) Überwachen einer zusätzlichen Potenzialdifferenz (ΔV1), die sich in der Schleife zwischen der Referenzelektrode (5) und der für Ionen empfindlichen Elektrode (2) in Reaktion auf das Einleiten des Prüfstroms (I1) entwickelt,
    c) Bestimmen, ob die zusätzliche Potenzialdifferenz (ΔV1) in einem erwarteten Bereich liegt, der die richtige Funktion des Sensors charakterisiert, und
    g) Ausgeben einer "Außerhalb der Lösung"-Warnung, wenn die für Ionen empfindliche Elektrode (2) nicht in eine wässrige Lösung eingetaucht ist, falls die zusätzliche Potenzialdifferenz (ΔV1) über einem erwarteten Bereich, der die richtige Funktion des Sensors charakterisiert, liegt, und Ausgeben einer "Glasbruch"-Warnung, falls die zusätzliche Potenzialdifferenz (ΔV1) unter einem erwarteten Bereich, der die richtige Funktion des Sensors charakterisiert, liegt.

2. Verfahren zum Überwachen der Sensorfunktion eines potentiometrischen Sensors, wobei der potentiometrische Sensor Folgendes umfasst:

    - eine für Ionen empfindliche Elektrode (2), die einen für Ionen empfindlichen Glaskolben (3) aufweist,
    - eine Referenzelektrodenanordnung (4), die eine Referenzelektrode (5) enthält,
    - eine Ionenerfassungsschaltung (6), die einen mit der für Ionen empfindlichen Elektrode (2) verbundenen ersten Anschluss (7) und einen mit der Referenzelektrode (5) verbundenen zweiten Anschluss (8) besitzt, wobei die Schaltung (6) entworfen ist, um die Potenzialdifferenz (V1), die sich in der Schleife zwischen der Referenzelektrode (5) und der für Ionen empfindlichen Elektrode (2) entwickelt, zu messen,

    wobei das Verfahren die folgenden Schritte umfasst:

    a) Einleiten eines im Voraus definierten elektrischen Prüfstroms (I1) von der Ionenerfassungsschaltung (6) in die Schleife, die die Referenzelektrode (5) und die für Ionen empfindliche Elektrode (2) enthält,
    b) Überwachen einer zusätzlichen Potenzialdifferenz (ΔV1), die sich in der Schleife zwischen der Referenzelektrode (5) und der für Ionen empfindlichen Elektrode (2) in Reaktion auf das Einleiten des Prüfstroms (I1) entwickelt,
    d) im Voraus Definieren eines Bereichs der elektrischen Impedanz (Rglass) des Glaskolbens (3), der eine richtige Funktion des Sensors charakterisiert,
    e) Berechnen der elektrischen Impedanz (Rglass) des für Ionen empfindlichen Glaskolbens (3) aus dem elektrischen Prüfstrom (I1) und der zusätzlichen Potenzialdifferenz (ΔV1),
    f) Bestimmen, ob die berechnete Impedanz (Rglass) des für Ionen empfindlichen Glaskolbens (3) in dem im Voraus definierten Bereich der elektrischen Impedanz des Glaskolbens (3), der eine richtige Funktion des Sensors charakterisiert, liegt, und

h) Ausgeben einer "Außerhalb der Lösung"-Warnung, wenn die für Ionen empfindliche Elektrode (2) nicht in eine wässrige Lösung eingetaucht ist, falls die berechnete Impedanz (Rglass) des für Ionen empfindlichen Glaskolbens (3) über dem höchsten Wert in dem im Voraus definierten Bereich von Werten der elektrischen Impedanz des Glaskolbens (3), der eine richtige Funktion des Sensors charakterisiert, liegt, und Ausgeben einer "Glasbruch"-Warnung, falls die berechnete Impedanz (Rglass) des für Ionen empfindlichen Glaskolbens (3) unter dem niedrigsten Wert in dem im Voraus definierten Bereich von Werten der elektrischen Impedanz des Glaskolbens (3), der eine richtige Funktion des Sensors charakterisiert, liegt.

3. Anordnung (1) eines potentiometrischen Sensors für die Ausführung des Verfahrens nach Anspruch 1, die Folgendes umfasst:

   - eine für Ionen empfindliche Elektrode (2), die einen für Ionen empfindlichen Glaskolben (3) aufweist,
   - eine Referenzelektrodenanordnung (4), die eine Referenzelektrode (5) enthält,
   - eine Ionenerfassungsschaltung (6), die einen mit der für Ionen empfindlichen Elektrode (2) verbundenen ersten Anschluss (7) und einen mit der Referenzelektrode (5) verbundenen zweiten Anschluss (8) besitzt, wobei die Schaltung (6) entworfen ist, um die Potenzialdifferenz ($\Delta$V1), die sich in der Schleife zwischen der Referenzelektrode (5) und der für Ionen empfindlichen Elektrode (2) entwickelt, zu messen,
   - eine digitale Speichereinheit (9), die entworfen ist, um wenigstens einen erwarteten Bereich einer zusätzlichen Potenzialdifferenz ($\Delta$V1), der eine richtige Funktion des Sensors charakterisiert, zu sichern,

   wobei die Ionenerfassungsschaltung (6) ferner entworfen ist, um die Schritte a), b), c) und g) von Anspruch 1 auszuführen.

4. Anordnung (1) eines potentiometrischen Sensors für die Ausführung des Verfahrens nach Anspruch 2, die Folgendes umfasst:

   - eine für Ionen empfindliche Elektrode (2), die einen für Ionen empfindlichen Glaskolben (3) aufweist,
   - eine Referenzelektrodenanordnung (4), die eine Referenzelektrode (5) enthält,

   - eine Ionenerfassungsschaltung (6), die einen mit der für Ionen empfindlichen Elektrode (2) verbundenen ersten Anschluss (7) und einen mit der Referenzelektrode (5) verbundenen zweiten Anschluss (8) besitzt, wobei die Schaltung (6) entworfen ist, um die Potenzialdifferenz (V1), die sich in der Schleife zwischen der Referenzelektrode (5) und der für Ionen empfindlichen Elektrode (2) entwickelt, zu messen,
   - eine digitale Speichereinheit (9), die entworfen ist, wenigstens einen Bereich von Werten der elektrischen Impedanz (Rglass) des Glaskolbens (3), der eine richtige Funktion des Sensors charakterisiert, zu sichern,

   wobei die Ionenerfassungsschaltung (6) ferner entworfen ist, um die Schritte a), b), d), e), f) und h) von Anspruch 2 auszuführen.

5. Anordnung (1) eines potentiometrischen Sensors nach einem der Ansprüche 3 oder 4, **dadurch gekennzeichnet, dass** die Referenzelektrodenanordnung (4) einen Behälter (10) umfasst, der einen Referenzpuffer (11) in Kontakt mit einer Flüssigkeitsverbindungsstelle (12), die sich zu einer äußeren Oberfläche des Behälters (10) erstreckt, enthält, und dass die Referenzelektrode (5) in dem Behälter (10) und in Kontakt mit dem Referenzpuffer (11) angeordnet ist.

6. Anordnung (1) eines potentiometrischen Sensors nach Anspruch 5, **dadurch gekennzeichnet, dass** die für Ionen selektive Elektrode (2) ferner einen zweiten Behälter (13) umfasst, der einen Ionenpuffer (14) enthält, wobei wenigstens ein Teil des zweiten Behälters (13) aus dem für Ionen empfindlichen Glaskolben (3) zusammengesetzt ist.

7. Anordnung (1) eines potentiometrischen Sensors nach Anspruch 6, **dadurch gekennzeichnet, dass** die für Ionen empfindliche Elektrode (2) eine für den pH-Wert empfindliche Elektrode ist, der Ionenpuffer (14) ein pH-Puffer ist und der für Ionen empfindliche Glaskolben (3) aus einem für den pH-Wert empfindlichen Glas hergestellt ist, wobei die für den pH-Wert empfindliche Elektrode (2) einen Silberdraht (15) umfasst, der wenigstens teilweise mit Silberchlorid (16) beschichtet ist, das mit dem pH-Puffer (14) in Kontakt ist.

8. Anordnung (1) eines potentiometrischen Sensors nach Anspruch 3 oder 4, **dadurch gekennzeichnet, dass** die Ionenerfassungsschaltung (6) ferner entworfen ist, um eine Verstärkung und/oder eine Filterung und/oder eine Analog/Digital-Umsetzung und/oder eine Signalübertragung in Bezug auf die Potenzialdifferenz (V1), die sich in der Schleife zwischen der Referenzelektrode (5) und der für Ionen empfindlichen Elektrode (2) entwickelt, auszuführen.

9. Anordnung (1) eines potentiometrischen Sensors nach Anspruch 8, **dadurch gekennzeichnet, dass** die Ionenerfassungsschaltung (6) als eine verteilte elektronische Schaltung entworfen ist, wobei wenigstens ein Teil der Funktionen der Verstärkung, der Filterung, der Analog/Digital-Umsetzung und der Signalübertragung in Bezug auf die Potenzialdifferenz, die sich in der Schleife zwischen der Referenzelektrode (5) und der für Ionen empfindlichen Elektrode (2) entwickelt, in einem Teil der Ionenerfassungsschaltung ausgeführt wird, der eine Einheit bildet, die von der für Ionen empfindlichen Elektrode trennbar oder nicht trennbar ist.

10. Anordnung (1) eines potentiometrischen Sensors nach Anspruch 8, **dadurch gekennzeichnet, dass** die Ionenerfassungsschaltung (6) ferner einen Mikroprozessor (19) und Datenspeichermittel (9) zum Speichern wenigstens eines Anwendungsprogramms für den Mikroprozessor (19) und von Sensorkonfigurationsdaten und Sensormessdaten umfasst.

11. Anordnung eines potentiometrischen Sensors nach Anspruch 10, **dadurch gekennzeichnet, dass** die Ionenerfassungsschaltung (6) ferner eine Schnittstelle (22) zum Ausgeben eines Signals an eine Einheit (26) höherer Ordnung, insbesondere einen Sender, und/oder zum Empfangen eines Signals von der Einheit (26) höherer Ordnung umfasst.

## Revendications

1. Procédé pour surveiller la fonction de capteur d'un capteur potentiométrique, le capteur potentiométrique comprenant :

   - une électrode sensible aux ions (2) comprenant une ampoule de verre sensible aux ions (3),
   - un ensemble d'électrode de référence (4) comprenant une électrode de référence (5),
   - un circuit de détection d'ions (6) ayant une première borne (7) connectée à l'électrode sensible aux ions (2) et une seconde borne (8) connectée à l'électrode de référence (5), ledit circuit (6) étant conçu pour mesurer la différence de potentiel (V1) qui se développe dans la boucle entre l'électrode de référence et l'électrode sensible aux ions (5, 2),

   le procédé comprenant les étapes de

   a) injection d'un courant électrique d'essai prédéfini (I1) à partir du circuit de détection d'ions (6) dans la boucle comprenant la référence et l'électrode sensible aux ions (5, 2),
b) surveillance d'une différence de potentiel supplémentaire (ΔV1) qui se développe dans la boucle entre la référence et l'électrode sensible aux ions (5, 2) en réaction à l'injection du courant d'essai (I1),
c) détermination si la différence de potentiel supplémentaire (ΔV1) est dans une plage attendue caractérisant un fonctionnement sain du capteur, et
g) émission d'un avertissement "hors solution", dans le cas où l'électrode sensible aux ions (2) n'est pas immergée dans une solution aqueuse, si la différence de potentiel supplémentaire (ΔV1) est supérieure à une plage attendue caractérisant un fonctionnement sain du capteur, et émission d'un avertissement "verre cassé", si la différence de potentiel supplémentaire (ΔV1) est inférieure à une plage attendue caractérisant un fonctionnement sain du capteur.

2. Procédé pour surveiller la fonction de capteur d'un capteur potentiométrique, le capteur potentiométrique comprenant :

   - une électrode sensible aux ions (2) comprenant une ampoule de verre sensible aux ions (3),
   - un ensemble d'électrode de référence (4) comprenant une électrode de référence (5),
   - un circuit de détection d'ions (6) ayant une première borne (7) connectée à l'électrode sensible aux ions (2) et une seconde borne (8) connectée à l'électrode de référence (5),

   ledit circuit (6) étant conçu pour mesurer la différence de potentiel (V1) qui se développe dans la boucle entre l'électrode de référence et l'électrode sensible aux ions (5, 2), le procédé comprenant les étapes de :

   a) injection d'un courant électrique d'essai prédéfini (I1) à partir du circuit de détection d'ions (6) dans la boucle comprenant la référence et l'électrode sensible aux ions (5, 2),
   b) surveillance d'une différence de potentiel supplémentaire (ΔV1) qui se développe dans la boucle entre la référence et l'électrode sensible aux ions (5, 2) en réaction à l'injection du courant d'essai (I1),
   d) prédéfinition d'une plage de l'impédance électrique (Rglass) de l'ampoule de verre (3) caractérisant un fonctionnement sain du capteur,
   e) calcul de l'impédance électrique (Rglass) de l'ampoule de verre sensible aux ions (3) à partir du courant électrique d'essai (I1) et de la différence de potentiel supplémentaire (ΔV1),
   f) détermination si l'impédance calculée (Rglass) de l'ampoule de verre sensible aux ions (3) est dans la plage prédéfinie de l'impédance électrique de l'ampoule de verre (3) caractérisant un fonctionnement sain du capteur, et

h) émission d'un avertissement "hors solution", dans le cas où l'électrode sensible aux ions (2) n'est pas immergée dans une solution aqueuse, si l'impédance calculée (Rglass) de l'ampoule de verre sensible aux ions (3) est supérieure à la valeur la plus élevée dans la plage prédéfinie de valeurs de l'impédance électrique de l'ampoule de verre (3) caractérisant un fonctionnement sain du capteur, et émission d'un avertissement "verre cassé" si l'impédance calculée (Rglass) de l'ampoule de verre sensible aux ions (3) est inférieure à la valeur la plus basse dans la plage prédéfinie de valeurs de l'impédance électrique de l'ampoule de verre (3) caractérisant un fonctionnement sain du capteur.

3. Ensemble de capteur potentiométrique (1) pour exécuter le procédé selon la revendication 1, comprenant :

   - une électrode sensible aux ions (2) comprenant une ampoule de verre sensible aux ions (3),
   - un ensemble d'électrode de référence (4) comprenant une électrode de référence (5),
   - un circuit de détection d'ions (6) ayant une première borne (7) connectée à l'électrode sensible aux ions (2) et une seconde borne (8) connectée à l'électrode de référence (5), ledit circuit (6) étant conçu pour mesurer la différence de potentiel (ΔV1) qui se développe dans la boucle entre l'électrode de référence et l'électrode sensible aux ions (5, 2),
   - une unité de stockage numérique (9) qui est conçue pour sauvegarder au moins une plage attendue de la différence de potentiel supplémentaire (ΔV1) caractérisant un fonctionnement sain du capteur, le circuit de détection d'ions (6) étant en outre conçu pour réaliser les étapes a), b), c) et g) selon la revendication 1.

4. Ensemble de capteur potentiométrique (1) pour exécuter le procédé selon la revendication 2, comprenant :

   - une électrode sensible aux ions (2) comprenant une ampoule de verre sensible aux ions (3),
   - un ensemble d'électrode de référence (4) comprenant une électrode de référence (5),
   - un circuit de détection d'ions (6) ayant une première borne (7) connectée à l'électrode sensible aux ions (2) et une seconde borne (8) connectée à l'électrode de référence (5), ledit circuit (6) étant conçu pour mesurer la différence de potentiel (V1) qui se développe dans la boucle entre l'électrode de référence et l'électrode sensible aux ions (5, 2),

   - une unité de stockage numérique (9) qui est conçue pour sauvegarder au moins une plage de valeurs de l'impédance électrique (Rglass) de l'ampoule de verre (3) caractérisant un fonctionnement sain du capteur,

   le circuit de détection d'ions (6) étant en outre conçu pour réaliser les étapes a), b), d), e), f) et h) selon la revendication 2.

5. Ensemble capteur potentiométrique (1) selon l'une quelconque des revendications 3 ou 4, **caractérisé en ce que**
   l'ensemble d'électrodes de référence (4) comprend un récipient (10) contenant un tampon de référence (11) en contact avec une jonction liquide (12) s'étendant jusqu'à une surface extérieure du récipient (10), et **en ce que** l'électrode de référence (5) est disposée dans le récipient (10) et en contact avec le tampon de référence (11).

6. Ensemble de capteur potentiométrique (1) selon la revendication 5, **caractérisé en ce que** l'électrode sélective d'ions (2) comprend en outre un second récipient (13) contenant un tampon d'ions (14), au moins une partie du second récipient (13) étant composée de l'ampoule de verre sensible aux ions (3).

7. Ensemble capteur potentiométrique (1) selon la revendication 6, **caractérisé en ce que**
   l'électrode sensible aux ions (2) est une électrode sensible au pH, le tampon d'ions (14) est un tampon de pH et l'ampoule de verre sensible aux ions (3) est faite de verre sensible au pH, l'électrode sensible au pH (2) comprenant un fil d'argent (15) revêtu au moins partiellement de chlorure d'argent (16) en contact avec le tampon de pH (14).

8. Ensemble capteur potentiométrique (1) selon la revendication 3 ou 4, **caractérisé en ce que** le circuit de détection d'ions (6) est en outre conçu pour préformer un ou plusieurs éléments parmi l'amplification, le filtrage, la conversion analogique-numérique, la transmission du signal par rapport à la différence de potentiel (V1) qui se développe dans la boucle entre la référence et l'électrode sensible aux ions (5, 2).

9. Ensemble de capteur potentiométrique (1) selon la revendication 8, **caractérisé en ce que** le circuit de détection d'ions (6) est conçu comme un circuit électronique distribué, au moins une partie des fonctions d'amplification, de filtrage, de conversion analogique-numérique, de transmission de signaux par rapport à la différence de potentiel qui se développe dans la boucle entre la référence et l'électrode sensible aux ions (5, 2) étant exécutée dans une telle partie du circuit sensible aux ions qui forme une unité séparable ou inséparable avec l'électrode sensible aux ions.

10. Ensemble capteur potentiométrique (1) selon la revendication 8, **caractérisé en ce que** le circuit sensible aux ions (6) comprend en outre un microprocesseur (19) et des moyens de stockage de données (9) pour stocker au moins un programme d'application pour le microprocesseur (19) et des données de configuration du capteur et des données de mesure du capteur.

11. Ensemble de capteurs potentiométriques selon la revendication 10, **caractérisé en ce que** le circuit de détection d'ions (6) comprend en outre une interface (22) pour délivrer un signal à une unité d'ordre supérieur (26), en particulier un émetteur, et/ou pour recevoir un signal en provenance de l'unité d'ordre supérieur (26).

Fig. 1

$$\Delta V_1 = I_1 * (R_{glass} + R_{junction} + R_{ref})$$

With: $R_{glass} \gg R_{junction} + R_{ref} \rightarrow$

$$\Delta V_1 \sim I_1 * R_{glass}$$

Fig. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4189367 A
- EP 0419769 A2

- US 6894502 B2